Europäisches Patentamt

European Patent Office

Office européen des brevets

(19)

(11) EP 0 588 733 B1

(12) **FASCICULE DE BREVET EUROPEEN**

(45) Date de publication et mention
de la délivrance du brevet:
**02.05.1997 Bulletin 1997/18**

(51) Int. Cl.⁶: **B01D 1/22**, B01D 1/06,
B01D 1/30, F25B 33/00,
F28D 5/02

(21) Numéro de dépôt: **93420366.2**

(22) Date de dépôt: **10.09.1993**

(54) **Contacteur gaz-liquide à film ruisselant**

Flüssiggas Kontaktapparat des fallenden Filmtyps

Gas-liquid contactor of falling film type

(84) Etats contractants désignés:
**BE CH DE DK ES GB IT LI LU NL SE**

(30) Priorité: **15.09.1992 FR 9211234**

(43) Date de publication de la demande:
**23.03.1994 Bulletin 1994/12**

(73) Titulaire: **LE CARBONE LORRAINE
F-92400 Courbevoie (FR)**

(72) Inventeur: **Le Goff, Pierre
F-54000 Nancy (FR)**

(74) Mandataire: **Pigasse, Daniel et al
Pechiney,
Service Brevets,
28, rue de Bonnel
69433 Lyon Cedex 03 (FR)**

(56) Documents cités:
**EP-A- 0 093 638          EP-A- 0 181 661
EP-A- 0 429 375**

• **CHEMICAL ABSTRACTS, vol. 82, no. 4, 27
Janvier 1975, Columbus, Ohio, US; abstract no.
17583w, MATEJICEK 'CONTINUOUS SLOT
REACTOR FOR SUSPENSION
POLYMERIZATION' page 57 ;colonne L ;**
• **CHEMICAL ABSTRACTS, vol. 82, no. 4, 27
Janvier 1975, Columbus, Ohio, US; abstract no.
17583w, MATEJICEK 'CONTINUOUS SLOT
REACTOR FOR SUSPENSION
POLYMERIZATION' page 57**

## Description

DOMAINE TECHNIQUE DE L'INVENTION

L'invention concerne le domaine des échangeurs de chaleur, plus particulièrement celui des contacteurs gaz-liquide à film ruisselant qui assurent des transferts de matière et de chaleur entre gaz et liquide.

ETAT DE LA TECHNIQUE

La demanderesse a dejà mis au point un dispositif d'échange thermique avec film ruisselant, comme décrit dans EP-A1-0 429 375.

Dans sa version de base, ce dispositif comprend un tube, dans lequel circule un fluide caloporteur, muni extérieurement d'une ailette hélicoïdale canalisant, sous forme de film mince, l'écoulement du liquide à traiter, l'ailette et le tube étant en contact thermique et eux-mêmes en matériau bon conducteur de la chaleur. Ce dispositif est destiné à réaliser des transferts de matière (absorption, évaporation, désorption...) entre le liquide à traiter et le gaz/ la vapeur surmontant ce liquide.

Un tel dispositif est typiquement obtenu par usinage d'un bloc de graphite ou de métal, de manière à obtenir un excellent échange thermique entre le tube central véhiculant le fluide caloporteur et l'ailette véhiculant le liquide à traiter.

PROBLEME POSE

La demanderesse a poursuivi ses investigations dans le domaine des dispositifs évaporateurs-absorbeurs (appelés aussi contacteurs gaz-liquide) pour deux raisons essentiellement :

- d'une part, pour augmenter encore le coefficient de transfert de chaleur entre le liquide à traiter et le fluide caloporteur (frigoporteur), afin d'augmenter l'efficacité du traitement et/ou de diminuer les dimensions des dispositifs concernés (recherche permanente de miniaturisation).
- d'autre part, pour réduire les coûts de fabrication, en particulier les couts de matière, le procédé de fabrication par usinage d'un bloc de matériau étant particulièrement gros consommateur de matériau.

Selon l'invention, le contacteur gaz-liquide à film ruisselant, pour transferts de matière et de chaleur entre gaz et liquide, comprend un support hélicoïdal, en matériau conducteur thermique, permettant l'écoulement par gravité, sous forme de film ruisselant, d'un liquide à traiter (évaporation ou absorption), une paroi, en matériau conducteur thermique et en contact thermique avec ledit support, séparant de manière étanche ledit liquide et un fluide caloporteur, et est caractérisé en ce que, ledit support hélicoïdal dudit liquide et ladite paroi sont formés par un empilement vertical de plaquettes ajourées et en matériau conducteur thermique, décalées angulairement d'un angle Phi les unes par rapport aux autres par rotation selon l'axe dudit support hélicoïdal, ledit angle Phi étant compris entre 6° (60 plaquettes par spire) et 90° (4 plaquettes par spire), chaque plaquette formant ainsi un élément dudit support, comme une marche d'un escalier en colimaçon, et un élément de ladite paroi, à l'aide de moyens assurant l'assemblage solide et étanche desdites plaquettes. On obtient ainsi un évaporateur ou un absorbeur économique et efficace grâce audit support favorisant le mélange dudit liquide et augmentant le transfert de chaleur entre ledit liquide et le fluide caloporteur.

Il est important de noter que le dispositif selon l'invention conserve, comme dans le cas d'un évaporateur monobloc de l'art antérieur, la continuité du matériau en contact avec le liquide à traiter et le fluide caloporteur (par souci de simplification, "fluide caloporteur" désigne, dans cette demande, un fluide porteur de calories ou porteur de frigories).

En effet, chaque plaquette forme, à la fois un élément de support pour l'écoulement du liquide à traiter, et un élément de paroi séparant le fluide caloporteur du liquide à traiter. Donc, la présente invention présente, tout comme dans l'art antérieur cité, une continuité de matériau (par tranche horizontale), donc un transfert de chaleur optimum au sein du matériau conducteur assurant l'échange de chaleur.

Par plaquette, on entend des objets dont une dimension, l'épaisseur, est faible comparé aux autres dimensions. Les plaquettes selon l'invention sont donc plutôt des objets "bidimensionnels" dont l'empilage conduit au dispositif "tridimensionnel" final.

Ainsi, alors que le dispositif monobloc de l'art antérieur nécessitait de partir d'un matériau en bloc de grande dimension, à la manière du sculpteur qui taille le marbre, et conduisait nécessairement à beaucoup de pertes de matière (chutes), le dispositif de la présente invention est obtenu à partir de plaquettes de faible épaisseur relative, obtenues typiquement par tronçonnage d'un profilé ad hoc obtenu par filage, ou par estampage d'un matériau en bande ou en plaque. Par tronçonnage, les pertes sont minimes. Par estampage, un découpage optimisé des plaquettes conduit à une perte de matière, qui est très nettement inférieure (jusqu'à 3 fois moindre) à celle obtenue avec le dispositif de l'art antérieur.

En outre, de manière surprenante, le coefficient de transfert de chaleur h entre le film ruisselant et son support (plaquette), dans le dispositif selon l'invention, a été trouvé amélioré par rapport à l'art antérieur.

A l'analyse, il est apparu, et par la suite les essais l'ont confirmé, que le mode d'écoulement particulier du liquide à traiter était le facteur explicatif prépondérant.

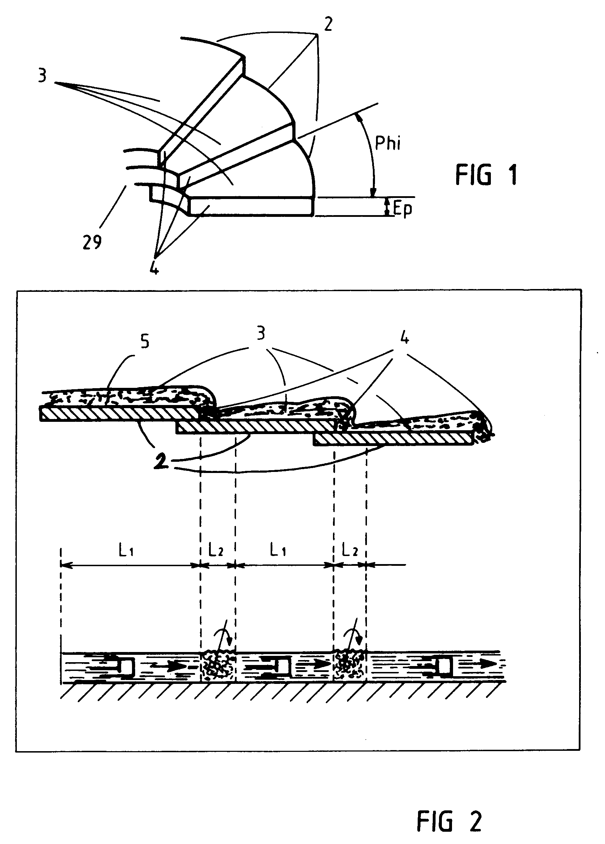

Selon l'hypothèse avancée par la demanderesse pour expliquer ces résultats, l'écoulement d'un film ruisselant sur un support constitué par les marches d'un escalier en colimaçon présenterait une hydrodynamique à deux régimes régulièrement alternés : alternance d'écoulement "piston" dans la partie horizontale de l'escalier (appelée "marche"), et d'écoulement "mélangeur parfait" dans la partie verticale (appelée "contremarche"), comme représenté aux figures 1 et 2, ce qui serait très favorable pour obtenir une valeur de h élevée.

Pour un type de plaquette donné, il est possible de fabriquer une grande variété de dispositifs simplement en faisant varier le décalage (ou pas) angulaire Phi, angle généralement constant entre deux plaquettes successives correspondant à la partie de la plaquette ou marche servant effectivement de support pour le film ruisselant. Il revient au même d'évoquer le nombre n de plaquettes par spire, puisque n = 360°/Phi°.

Il a été observé qu'il existe un domaine pour l'angle Phi qui conduit à une valeur de h optimum. Tout semble se passer comme s'il fallait qu'il y ait un certain équilibre entre la proportion de "marche" (écoulement piston) et de "contremarche" (mélangeur parfait).

Avec des plaquettes d'épaisseur Ep comprise entre 0,5 et 20 mm, et de préférence comprise entre 1 et 10 mm, comme prévu par l'invention, le domaine optimum pour l'angle Phi a été trouvé compris entre 6° (60 plaquettes par spire) et 90° (4 plaquettes par spire) et de préférence entre 10 et 36° (de 10 à 36 plaquettes par spire). En dehors de ce domaine, la valeur de h diminue fortement, sans doute, soit parce qu'il n'y a pas assez de mélange lorsque Phi est supérieur à 90°C, soit parce qu'il y en a trop (écoulement de type torrent) lorsque Phi est inférieur à 6°.

DESCRIPTION DES FIGURES

La figure 1 représente en perspective un empilement (29) de 3 plaquettes (2) formant un support en forme d'escalier en colimaçon, chaque plaquette présentant une surface horizontale (3) dite "marche", et une surface verticale (4) dite "contremarche".

Les plaquettes sont décalées angulairement d'un angle Phi les unes par rapport aux autres, autour d'un axe central (8) (axe de l'hélice) non représenté.

La figure 2 schématise en coupe un écoulement d'un film ruisselant (5) sur un empilement de plaquettes (2), ainsi que la succession de régimes hydrodynamiques correspondants écoulement dit "piston" (symbolisé par un piston) lorsque le film ruisselant s'écoule sur la marche (3) et à distance de la contremarche (4), c'est à dire sans mélange significatif des filets liquides (sur une longueur L1), écoulement dit "mélangeur parfait" (symbolisé par une turbine) lorsque le film ruisselant franchit la contremarche (4) (sur une longueur L2).

Les figures 3a à 3c représentent des vues de dessus de plaquettes (2) selon la première modalité de l'invention.

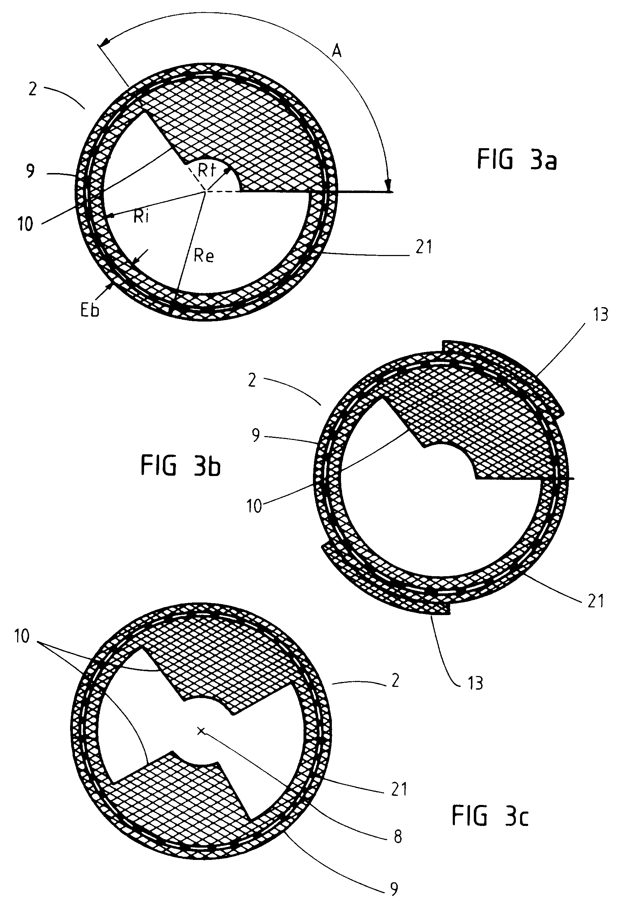

La figure 3a représente une plaquette (2) comprenant une partie annulaire (9) de rayon intérieur Ri et de rayon extérieur Re (largeur Eb = Re - Ri ), et une ailette intérieure (10) ayant la forme d'une portion de couronne (secteur d'angle A), de rayon intérieur Rt et de rayon extérieur Ri.

La partie annulaire (9) porte une rainure circulaire (21) (marquée par des croix x) destinée à recevoir un joint d'étanchéité. Il importe de noter que les rainures d'étanchéité de cette figure et des suivantes sont facultatives, car il existe de nombreux moyens pour assurer l'étanchéité entre plaquettes ne nécessitant pas de rainures.

La figure 3b représente une plaquette (2) analogue à celle de la figure 3a, sauf qu'elle contient en plus 2 ailettes extérieures (13) destinées à faciliter le centrage des plaquettes dans une enveloppe cylindrique externe (non représentée), et à assurer un écoulement hélicoïdal du fluide caloporteur circulant entre cette enveloppe et la paroi du contacteur gaz-liquide.

La figure 3c représente une plaquette (2) analogue à celle de la figure 3a, sauf en ce qu'elle contient 2 ailettes intérieures (10) symétriques par rapport à l'axe central (8) perpendiculaire à la plaquette (2).

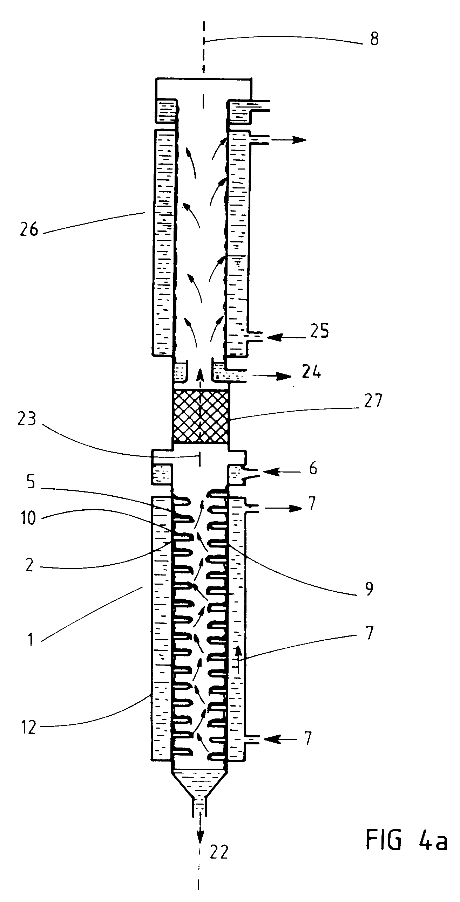

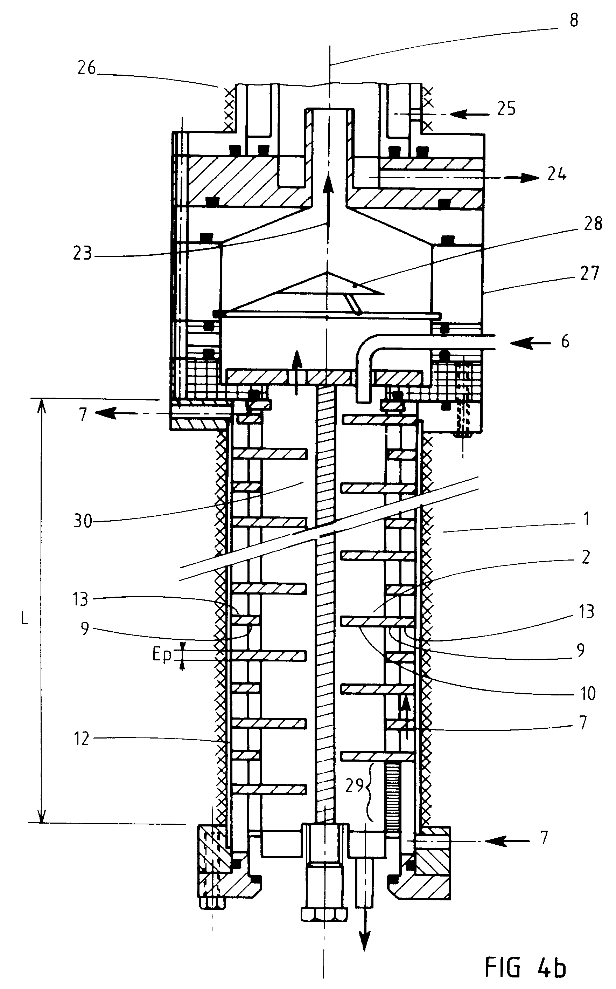

Les figures 4a et 4b représentent en coupe selon l'axe vertical (8), des dispositifs comprenant un contacteur gaz-liquide (1).

La figure 4a est un schéma de principe d'un dispositif d'évaporation-condensation comprenant un contacteur gaz-liquide (1) selon la première modalité de l'invention, formé d'un empilement de plaquettes (2), chacune comprenant une partie annulaire (9) constituant la paroi d'un tube et une ailette intérieure (10). Le contacteur gaz-liquide (1) est alimenté en liquide (6) à évaporer dans sa partie centrale, et en fluide caloporteur (7) dans la partie périphérique (dans la double paroi formée par une enveloppe externe (12) et le tube formé par l'empilement des parties anulaires (9)). Il est surmonté d'une chambre de calmage (27) et d'un condenseur (26) refroidi par un fluide réfrigérant (25), qui condense la vapeur (23), issue du contacteur gaz-liquide (1), en liquide (24). On récupère à la base du contacteur le liquide (22).

La figure 4b représente un dispositif selon la première modalité de l'invention, décrite à l'exemple 1. Le dessin est à l'échelle 1/2 (1 cm représente 2 cm), avec L = 500 mm.

Pour la clarté du dessin, d'une part on n'a représenté que les plaquettes (2) indiquant le pas de la spirale hélicoïdale (escalier en colimaçon), d'autre part ces plaquettes (2) ont été représentées plus épaisses qu'en réalité (épaisseur réelle = 4 mm). On a représenté par l'empilement de plaquettes (29), l'épaisseur des plaquettes (2) à l'échelle du dessin.

Il est à noter que les plaquettes (2) sont constituées d'une partie annulaire (9) portant intérieurement une ailette (10) et extérieurement deux ailettes (13) pour faciliter le montage et le centrage des plaquettes dans le tube (12) formant enveloppe externe (sur le dessin les croix X représentent le calorifugeage du tube (12)), et pour imprimer au fluide caloporteur (7) un mouvement hélicoïdal.

Sur la figure 4b est représenté en détail la chambre de calmage (27) équipée de la barrière antiprimage (28) destinée à empêcher des entraînements de liquide (6) par la vapeur (23) vers le condenseur.

Dans ce type de dispositif, la compression étanche des plaquettes (2) est assurée à l'aide de la tige filetée (30).

Les figures 5a à 5e illustrent la seconde modalité de l'invention.

La figure 5a est une vue en perspective d'une plaquette (2) comprenant une partie annulaire (9) centrée selon l'axe (8) perpendiculaire, et une ailette (11) extérieure à cette partie annulaire.

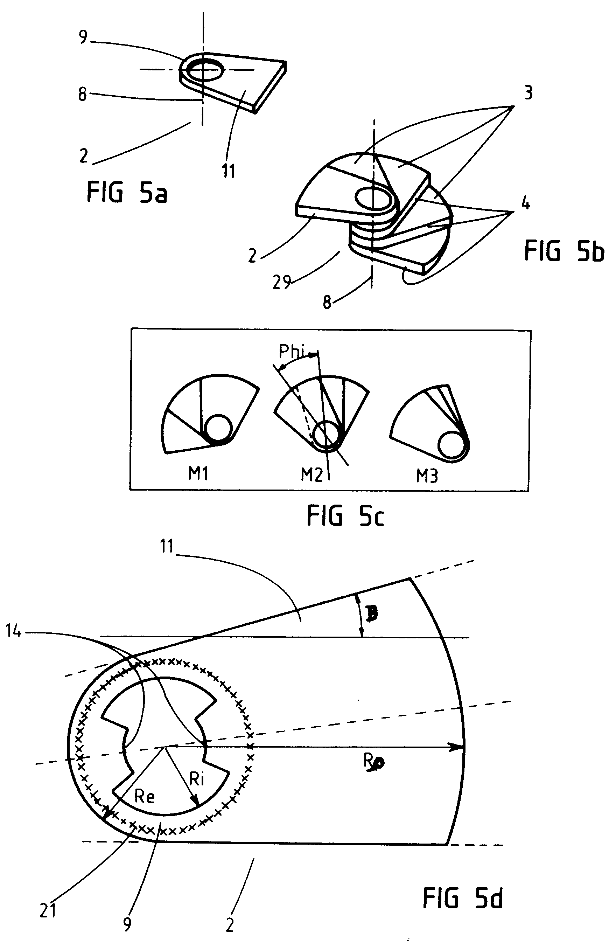

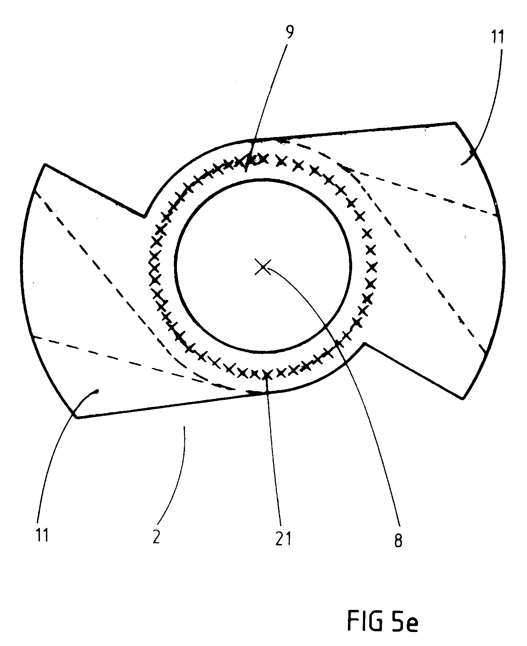

La figure 5b schématise (vue en perspective) un empilement (29) de 4 plaquettes selon la seconde modalité : il en résulte la formation d'un tube central (empilement des parties annulaires) destiné à la circulation du fluide caloporteur, et d'un escalier formé de parties horizontales ou marches (3) et de parties verticales ou contremarches (4), destiné à l'écoulement du film ruisselant.

La figure 5c est une vue de dessus d'un empilement de 3 plaquettes montrant que, par variation de l'angle Phi (décalage angulaire entre deux plaquettes successives), on forme des escaliers plus ou moins raides (contacteurs M1, M2 et M3 de l'exemple 2).

La figure 5d est une vue de dessus d'une plaquette (2) comprenant une ailette (11) et une partie annulaire (9), où on a représenté une rainure d'étanchéité (21), et qui contient intérieurement deux ailettes (14) destinées à faciliter le montage et le centrage des plaquettes, et à assurer une circulation hélicoïdale du fluide caloporteur.

La figure 5e est une vue de dessus d'une plaquette (2) comprenant deux ailettes (11), symétriques par rapport à l'axe (8), de manière à former un empilement (29) à double hélice.

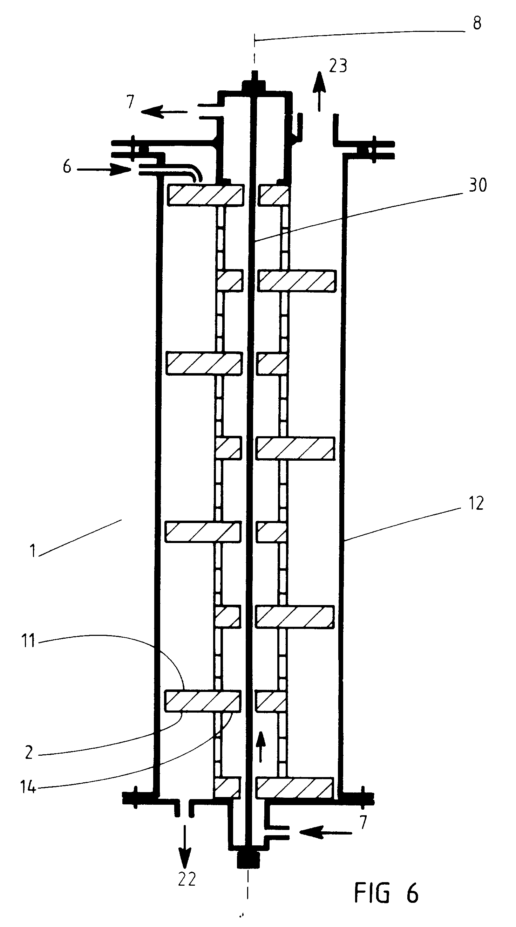

La figure 6 représente, en coupe selon l'axe (8), un contacteur gaz-liquide (1) selon la seconde modalité de l'invention, obtenu par empilage de plaquettes représentées à la figure 5d. On n'a représenté que les plaquettes indiquant le pas de la spirale hélicoïdale.

Dans ce dispositif, la compression étanche des plaquettes est assurée en exerçant une traction sur une tige centrale (30) à extrémités filetées.

Les références communes aux figures 6 et 4a-4b, ayant la même signification, ne sont pas reprises ici.

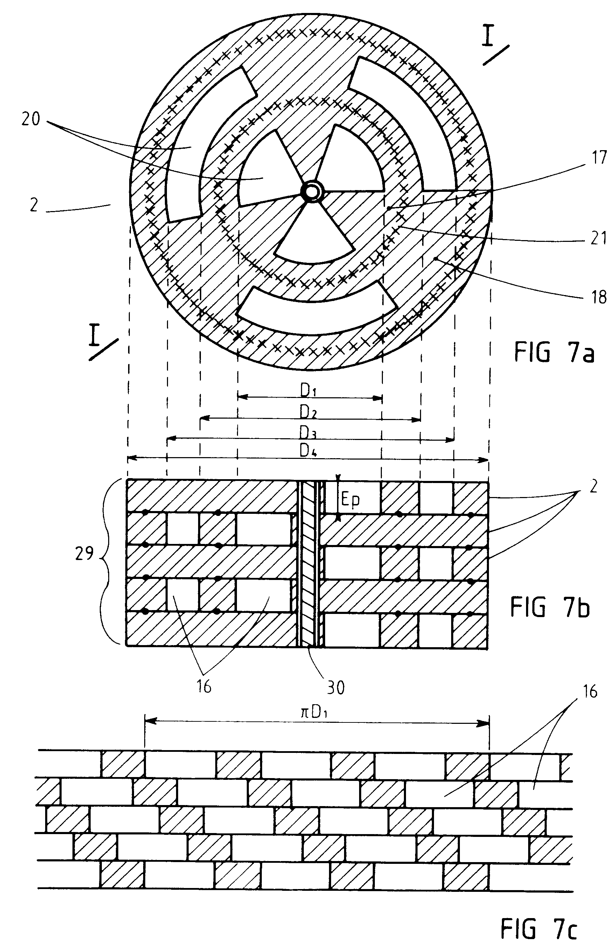

Les figures 7a à 7d, 8a à 8b, et 9a à 9e illustrent une troisième modalité de l'invention dans laquelle la plaquette (2) est constitué d'une plaque mince cylindrique ajourée munie d'au moins deux orifices distincts.

La figure 7a est une vue de dessus d'une plaquette illustrant une première variante avec des orifices (20) en forme de portions d'anneaux, la plaquette étant divisée en deux parties séparées par une zone cylindrique étanche. L'étanchéité de cette zone ainsi que de celle de la zone extérieure sont éventuellement obtenues, comme représenté sur la figure 7a, par des rainures circulaires (21) contenant un joint torique en matériau élastique.

Une partie circulaire intérieure (17) contient des orifices (20) destinés, par exemple, à la circulation du fluide caloporteur, l'autre partie annulaire extérieure (18) contenant autant d'orifices, en regard des précédents, destinés à l'écoulement du film ruisselant. On peut avoir aussi l'inverse : le fluide caloprteur à l'extérieur et le film ruisselant à l'intérieur.

Sur cette figure, mais ce n'est là qu'une option, la plaquette comporte un orifice central permettant le passage d'une tige (30) à extrémités filetées pour assurer la compression étanche des plaquettes.

La figure 7b est une vue en coupe axiale d'un empilement (29) de 5 plaquettes (2) montrant la formation des canaux (16) par décalage angulaire des plaquettes (Phi = 60°).

La plaquette supérieure est une coupe de la plaquette de la figure 7a selon l'axe I-I.

La figure 7c représente une développée de l'empilement de la figure 7b pour le diamètre D1 et montre les canaux (16) en escalier.

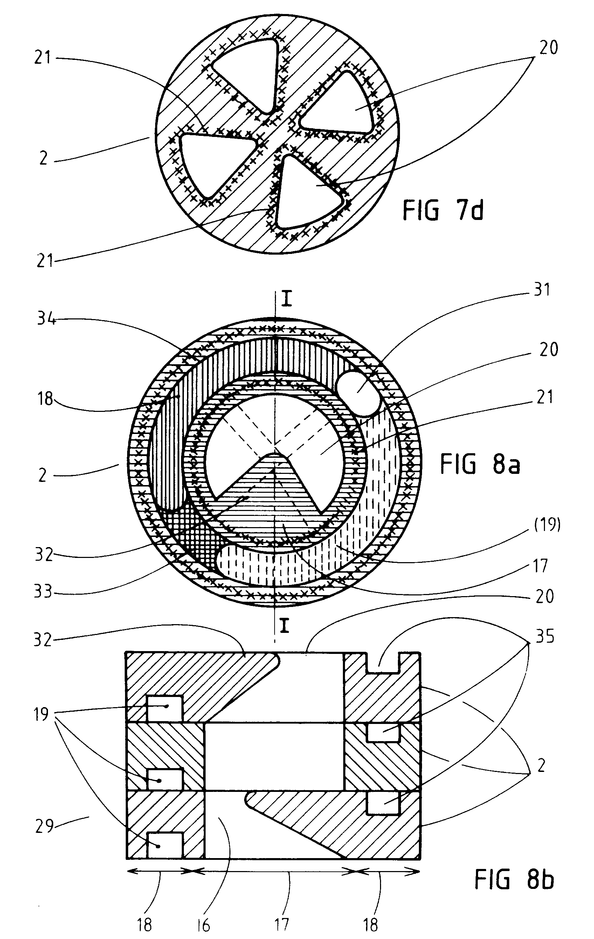

La figure 7d, qui illustre une seconde variante, est une vue de dessus d'une plaquette (2) divisée en quartiers, chaque quartier ayant un orifice (20), un même fluide ou liquide circulant dans deux orifices opposés pour obtenir un bon échange thermique. L'étanchéité entre orifices et vis à vis de l'extérieur est représentée par des rainures d'étanchéité (21), qui ne constituent qu'un moyen d'étanchéité parmi d'autres.

Les figures 8a et 8b ilustrent une troisième variante.

La figure 8a est une vue de dessus d'une plaquette (2) ayant deux parties concentriques séparées par une zone d'étanchéité circulaire représentée par la rainure d'étanchéité (21) : une partie intérieure (17) comprenant une ailette (32) à section verticale radiale de forme trapézoïdale, une partie annulaire extérieure (18) à la partie supérieure de la plaquette, comprenant une gorge annulaire (34) à la partie supérieure de la plaquette, une gorge annulaire (19) à la partie inférieure de la plaquette (représentée bien que non visible de dessus) et un orifice (31) faisant communiquer les deux gorges (19) et (35). Sur cette figure, ces gorges décrivent un arc de cercle de 160° environ. La partie doublement hachurée (33) correspond à une portion annulaire sans gorge annulaire ni supérieure, ni inférieure.

La figure 8b représente une coupe axiale d'un empilement (29) de 3 plaquettes selon la figure 8a, avec un décalage angulaire Phi de 90°. La plaquette supérieure correspond à une coupe de la plaquette de la figure 8a selon l'axe I-I.

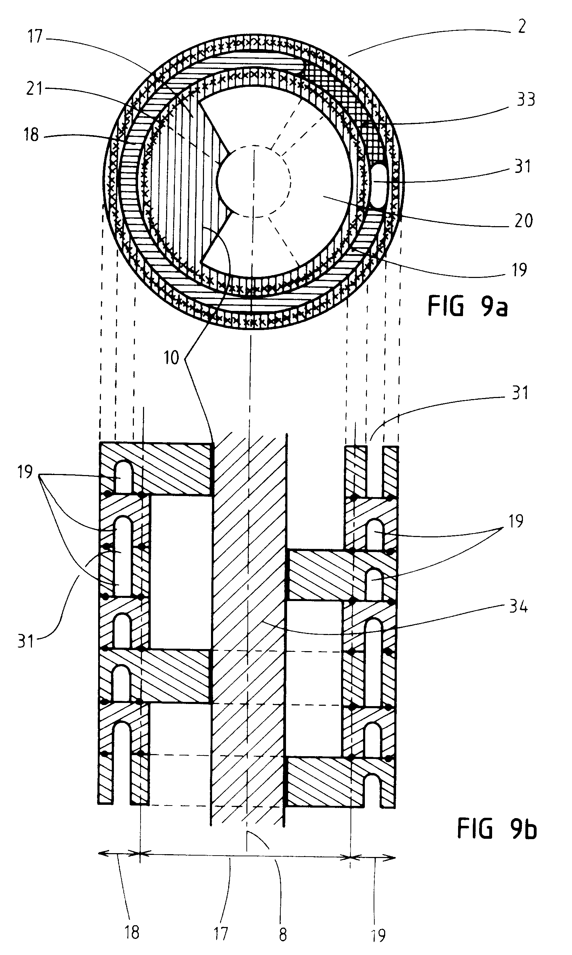

Les figures 9a et 9b sont analogues aux figures 8a et 8b. Elles diffèrent en ce qu'il n'y a pas de gorge supérieure (34) comme aux figures 8a et 8b, en ce que l'ailette intérieure des figures 9a et 9b est une ailette (10) de même épaisseur que l'épaisseur de la plaquette, et en ce que l'extrémité intérieure de l'ailette a la forme d'un arc de cercle, de manière à obtenir, grâce à un noyau central (34) un montage aisé des plaquettes et la possibilité de réaliser des échanges thermiques à contre-courant (gaz ou vapeur d'eau circulant en hélice de bas en haut à contre-courant du film ruisselant), nécessaires dans certaines applications, notamment en absorption gaz-liquide.

Comme aux figures 8a et 8b, la gorge annulaire (19) ne parcourt pas toute la circonférence, une portion de circonférence (33) étant pleine, de manière à forcer la circulation du fluide caloporteur dans la gorge (19).

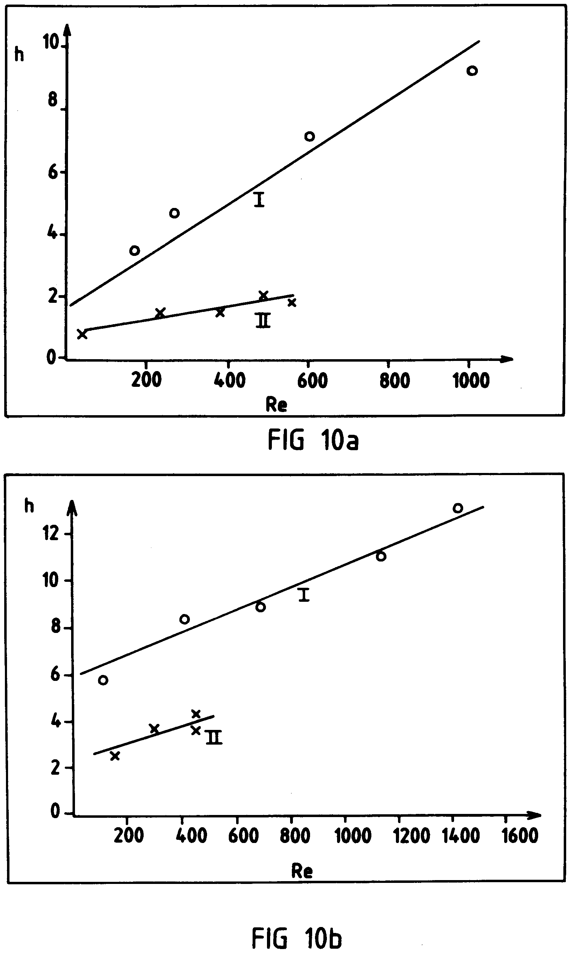

Les figures 10a et 10b sont des graphiques donnant le coefficient h de transfert de chaleur entre film ruisselant et ailette (h en ordonnée en $kW.m^{-2}.°K^{-1}$) en fonction du nombre de Reynolds du film ruisselant (Re en abscisse) du contacteur gaz-liquide en laiton réalisé à l'exemple 1.

La figure 10a est relative à l'échauffement du film ruisselant, et la figure 10b à la désorption du film (séparation d'une phase volatile). Les courbes I (o) sont relatives au contacteur gaz-liquide selon l'invention, les courbes II (x) étant relatives à un tube lisse en même matériau (laiton).

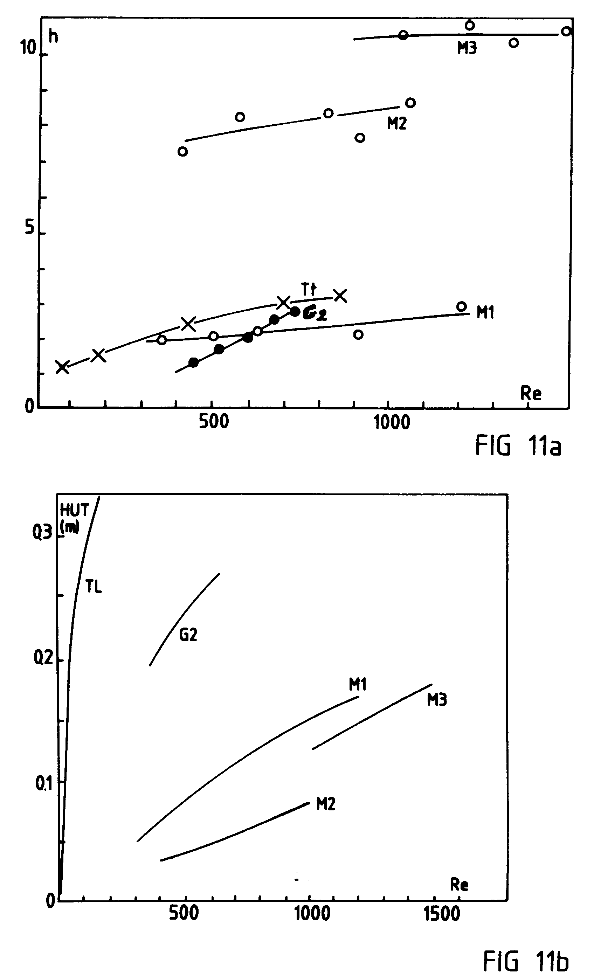

Les figures 11a et 11b sont des graphiques relatifs aux contacteurs gaz-liquide (M1-M2-M3) en cuivre réalisés à l'exemple 2 et relatifs à l'échauffement du film ruisselant.

La figure 11a est équivalente à la figure 10a (h en ordonnée en $kW.m^{-2}.°K^{-1}$, Re en abscisse), alors que la figure 11b donne la HUT en abscisse (en mètres) en fonction du nombre de Reynolds Re.

La HUT (Hauteur d'Unité de Transfert) est une grandeur inversement proportionnelle au produit h.A où h désigne le coefficient de transfert thermique ailette-film ruisselant et où A désigne l'aire de la paroi-support du film ruisselant. La HUT permet de comparer des appareils et traduit en quelque sorte la hauteur du dispositif à performances égales : plus HUT est petit, plus le dispositif est performant (capacité d'échange thermique par unité de volume).

Sur les figures 11a et 11b, les courbes notées M1, M2, M3 (o) correspondent aux contacteurs gaz-liquide selon l'invention, et les courbes notées TL (x), G2 (●) correspondent à des contacteurs gaz-liquide de l'art antérieur (TL est un tube lisse en cuivre, G2 est un échangeur hélicoïdal en graphite selon l'art antérieur cité (voir exemple 2).

## DESCRIPTION DETAILLEE DE L'INVENTION

Bien que cela ne soit pas indispensable pour réaliser l'invention, il est commode et économique d'avoir un contacteur formé par empilement de plaquettes (2) ajourées identiques entre elles et planes.

En effet, le coût d'un contacteur gaz-liquide est en grande partie liée au coût de fabrication des plaquettes (2). Des plaquettes économiques (identiques et sensiblement planes) sont obtenues par deux procédés :

- soit par estampage, découpage de matériau de départ en bande mince d'épaisseur Ep (Ep désignant l'épaisseur de la plaquette à obtenir), une opération d'estampage pouvant également former simultanément une rainure de faible profondeur (par rapport à Ep) à la surface de la plaquette, rainure pouvant contribuer à assurer l'étanchéité entre plaquettes, comme cela sera vu ensuite.
- soit par tronçonnage d'un profilé obtenu par filage. Dans ce cas, il n'y a aucune perte de matière, contrairement au cas précédent où il reste toujours un "squelette" de bande après estampage, sauf avec des plaquettes formant un pavage continu).

Selon une première modalité de l'invention, le contacteur gaz-liquide est formé de plaquettes (2) comprenant une partie annulaire (9) formant un élément de ladite paroi et munie intérieurement d'au moins une ailette intérieure (10) formant un élément dudit support, de manière à obtenir, par empilement desdites plaquettes, un tube à l'intérieur duquel s'écoule ledit liquide (6), et dont la surface externe est en contact avec ledit fluide caloporteur (7), comme représenté aux figures 3a à 3c, 4a et 4b.

Ces plaquettes présentent un rapport Re/Ep compris entre 4 et 20, et de préférence entre 6 et 10, Re étant le rayon extérieur de ladite partie annulaire et Ep étant l'épaisseur de ladite plaquette, ceci, pour Intégrer a la fois les notions de similitude, de faisabilité (obtention des plaquettes) et d'efficacité technique et économique, qui excluent, comme le montrent les essais ou les calculs, des rapports Re/Ep trop faibles ou trop élevés.

La partie annulaire (9) constitue un élément de paroi soumis à des contraintes mécaniques, aussi le rapport Eb/Ep, Eb désignant la largeur de ladite partie annulaire (différence entre Re, rayon extérieur, et Ri, rayon intérieur) est compris entre 0,5 et 5, et de préférence entre 1 et 2.

De préférence, ladite ailette intérieure (10) a la forme d'une portion de couronne ou d'un secteur, l'angle A dudit secteur, ou la somme des angles desdits secteurs au cas où ladite plaquette comprend plus d'un secteur (figure 3c), étant compris entre 60 et 200°, et de préférence compris entre 100 et 160°.

Afin d'assurer la circulation d'un fluide caloporteur à la surface extérieure de la paroi formée par l'empilement (29) des plaquettes, on entoure l'empilement (29) d'une enveloppe cylindrique isolante (12), tube entourant de manière concentrique ledit empilement avec un intervalle entre ladite paroi et ladite enveloppe permettant la circulation dudit fluide caloporteur (7) entre ladite paroi et ladite enveloppe.

En particulier lorsque l'assemblage des plaquettes ne fait pas appel à une tige centrale (30), il est avantageux que ladite partie annulaire (9) comprenne extérieurement au moins deux ailettes (13) symétriques par rapport à l'axe (8) dudit support hélicoïdal, de manière à faciliter le centrage et le montage des plaquettes (2) à l'intérieur de l'enveloppe cylindrique (12), généralement isolante ou revêtue d'une couche isolante, et à obtenir une circulation hélicoïdale dudit fluide caloporteur entre ledit tube et ladite enveloppe isolante, ce qui est favorable sur le plan de l'échange thermique.

Selon une seconde modalité de l'invention, ladite plaquette (2) comprend une partie annulaire (9) formant un élément de ladite paroi et munie extérieurement d'au moins une ailette extérieure (11) formant un élément dudit support, de manière à obtenir, par empilement desdites plaquettes, un tube muni à sa surface externe d'un support helicoïdal destiné à l'écoulement dudit liquide (6), et dont la surface interne est en contact avec ledit fluide caloporteur (7).

Les figures 5a à 5e et 6 correspondent à cette modalité. Comme cela apparaît sur les figures 5a à 5e, ladite ailette extérieure (11) a la forme d'un secteur limité, dans le sens radial, par deux côtés tangents audit bord annulaire, et faisant entre eux un angle B compris entre - 30 et + 90 °, et de préférence compris entre 0 et 40°.
Par exemple, l'ailette de la figure 5b a un angle B de 20°.

Il est préférable d'un point de vue pratique que ladite ailette extérieure (11) ait la forme d'un secteur limité, dans le sens tangentiel, par un arc de cercle de rayon Rs dont le centre est celui de la partie annulaire, de manière à pouvoir, si nécessaire, utiliser une enveloppe externe (12) cylindrique qui soit, éventuellement, tangente au bord extérieur des ailettes extérieures (11).

Pour les raisons déjà évoquées à propos des rapports Re/Ep et Eb/Ep (première modalité), le rapport Rs/Ep doit être compris, dans la seconde modalité, entre 3 et 30, et de préférence entre 5 et 20, selon que le matériau utilisé est moyennement ou très conducteur de la chaleur, et le rapport Eb/Ep, Eb désignant la largeur de ladite partie annulaire (différence entre Re, rayon extérieur, et Ri, rayon intérieur) doit être compris entre 0,2 et 3, et de préférence entre 0,5 et 2.

Selon une variante particulière de cette seconde modalité, ladite plaquette (2) comprend deux ailettes extérieures (11) symétriques par rapport à l'axe (8) dudit support hélicoïdal, comme représenté à titre d'exemple à la figure 5e.

La figure 6 représente un contacteur gaz-liquide construit selon cette seconde modalité, avec des plaquettes représentées à la figure 5d, dont la partie annulaire (9) comprend intérieurement 2 ailettes (14) (il en faut au moins une), de manière à assurer un écoulement hélicoïdal du fluide caloporteur (7), et éventuellement un centrage aisé desdites plaquettes (autour de la tige à extrémité filetée (30) dans le cas de la figure 6).

Selon une troisième modalité de l'invention, ladite plaquette (2) est constituée par une plaque cylindrique ajourée munie d'au moins deux orifices distincts (20, 31), de manière à obtenir, par empilement desdites plaquettes, un cylindre muni à l'intérieur d'au moins deux canaux hélicoïdaux (16) permettant l'écoulement en parallèle dudit liquide (6) et dudit fluide caloporteur (7).
Cette troisième modalité présente de nombreuses variantes dont 4 sont décrites à titre d'illustration.

Selon une première et une seconde variante schématisée respectivement par les figures 7a à 7c et 7d, lesdits orifices (20) ont la forme de portions d'anneaux ou de secteurs limités, dans le sens radial, par deux segments de droites concourants selon l'axe dudit support hélicoïdal, et dans le sens tangentiel, par deux arcs de cercle. Ladite plaquette comprend 2.n orifices distincts avec une symétrie axiale d'ordre n par rapport à l'axe dudit support hélicoïdal (superposition par rotation de 360°/n), n orifices étant destinés à l'écoulement dudit liquide et n orifices étant destinés à l'écoulement dudit fluide caloporteur, avec n supérieur à 1 et de préférence égal à 2 ou à 3.

La première variante est schématisée par la figure 7a : les n orifices (20) (n = 3) destinés à l'écoulement dudit liquide (6) sont situés sur la partie annulaire extérieure (18) de la plaquette (2), alors que les n (n = 3) orifices (20) destinés à l'écoulement dudit fluide caloporteur (7) sont situés sur la partie circulaire intérieure (17) de ladite plaquette. Entre ces deux parties (17) et (18), se trouve une zone circulaire étanche. L'étanchéité entre orifices intérieurs et extérieurs, ainsi qu'entre orifices et atmosphère environnante est assurée par tout moyen connu, éventuellement par des rainures circulaires (21).

La seconde variante est schématisée à la figure 7d : les orifices (20) forment une succession de secteurs creux (2.n avec n = 2) séparés par des secteurs pleins destinés à assurer l'étanchéité entre orifices. Sur la figure 7d, les secteurs sont de taille inégale : les deux "petits" secteurs opposés sont destinés à la circulation du fluide caloporteur (7), les deux "grands" à l'écoulement du liquide à traiter (6).
L'étanchéité de chaque secteur est éventuellement réalisée grâce à une rainure entourant chaque secteur et contenant un joint torique en matériau élastique (caoutchouc).

Selon une troisième et quatrième variante, représentée par les figures 8a et 8b, et 9a et 9b, ladite plaquette (2) comprend deux parties annulaires concentriques séparées par une zone annulaire étanche, l'une (17), intérieure, portant une ailette (10, 32) destinée à l'écoulement dudit liquide (6), l'autre (18), extérieure, munie d'un orifice (31) à la partie supérieure de la plaquette débouchant sur une gorge circulaire (19) située à la partie inférieure de la plaquette pour permettre la circulation dudit fluide caloporteur (7) sur tout ou partie de la circonférence de la partie annulaire extérieure (18). On peut également avoir une gorge (34) sur la partie supérieure de la zone annulaire (18). Ces gorges (19 et 34) sont destinées à forcer le fluide caloporteur à circuler selon tout le trajet horizontal des gorges (19 et 34) d'une plaquette (2) donnée avant de passer à la plaquette suivante.

Selon la troisième variante, ladite ailette peut avoir une section verticale radiale de forme trapézoïdale, de manière à favoriser l'ecoulement dudit liquide sur la face inférieure de ladite ailette, par débordement dudit liquide.

Selon la quatrième variante, ladite ailette présente une extrémité en arc de cercle et le contacteur comprend un noyau cylindrique axial (34) de manière à former un canal hélicoïdal sans communication verticale directe.

Il est possible dans certains cas de combiner ces diverses variantes.

Quelles que soient les modalités et les variantes de l'invention, les plaquettes (2) sont en matériau conducteur thermique choisi parmi les métaux ou alliages métalliques, le graphite.

On choisit de préférence, comme matériau conducteur thermique, le cuivre et alliages de cuivre, l'aluminium et alliages d'aluminium, ou l'acier inoxydable quand est recherchée une résistance élevée à la corrosion.

Des contacteurs gaz-liquide, avec une hauteur d'empilement (29) comprise entre 200 et 2000 mm, peuvent être obtenus selon l'invention.

Comme il est généralement souhaitable ou indispensable que ledit liquide (6) et ledit fluide caloporteur (7) ne puissent se mélanger, l'étanchéité de ladite paroi est assurée, soit par la simple compression des plaquettes avec de minces feuilles intercalaires d'un matériau d'étanchéité adéquat prédécoupé (film plastique, d'élastomère ou de caoutchouc, feuille de graphite expansé recomprimé, etc...), soit à l'aide de moyens connus en eux-mêmes, typiquement à l'aide de rainures circulaires ou radiales à la surface de ladite plaquette et de joints, par collage, par soudure. Quant'à l'assemblage solide des plaquettes empilées, il est obtenu par les moyens connus en eux-mêmes, typiquement à l'aide de tiges à extrémités filetées permettant de maintenir comprimé ledit empilement.

Les contacteurs gaz-liquide selon l'invention comprenent des moyens, connus en eux-mêmes, pour assurer l'alimentation et la circulation dudit liquide et dudit fluide caloporteur, ainsi que la circulation des vapeurs surmontant ledit liquide.

Ces contacteurs gaz-liquide sont particulièrement utilisés pour séparer, par évaporation-condensation, un mélange liquide dont certains constituants sont volatils (par exemple évaporation d'eau de mer) et d'autres pas, ou pour absorber une vapeur, pure ou diluée au sein d'un gaz inerte, dans un liquide absorbant non volatil (par exemple, absorption de chlorure d'hydrogène gazeux dans l'eau pour former une solution de chlorure d'hydrogène). L'absorption peut être suivie d'une réaction en phase liquide exo- ou endothermique.

EXEMPLES DE REALISATION

Exemple 1

Cet exemple correspond à la première modalité de l'invention.

On a fabriqué 113 plaquettes en laiton, ayant la forme de la plaquette décrite à la figure 3b, par estampage d'une plaque de laiton de 4 mm d'épaisseur. L'outil d'estampage permet de former une rainure circulaire (21) de 0,5 mm de profondeur et de 2 mm de large.

Autres paramètres géométriques de la plaquette :

* Angle A = 120°
* Rayon extérieur Re de la plaquette = 30 mm
* Rayon intérieur Ri de la partie annulaire = 25 mm (ou de la base de l'ailette)
* Rayon Rt de la tête de l'ailette = 7,5 mm
* Ailettes externes (13) de 5 mm de largeur et selon un angle de 60°.

On a ensuite fabriqué un dispositif d'évaporation condensation comme représenté à la figure 4b et comprenant le contacteur gaz-liquide (1).

La représentation est à l'échelle 1/2, sauf en ce qui concerne la longueur du contacteur ( L = 500 mm) et l'épaisseur des plaquettes (Ep = 4 mm) qui ne sont pas à l'échelle pour des raisons de clarté.

L'angle Phi de décalage angulaire vaut 23,9°, ce qui correspond à environ 15 plaquettes par tour de la spirale (pas de l'hélice), et à 7,5 tours de spirale pour l'ensemble de la hauteur du contacteur gaz-liquide.

Pour le montage et l'assemblage, on a utilisé une tige à extrémité filetée (30) de 10 mm de diamètre et un tube (12) en acier de 72 mm de diamètre intérieur, la tige (30) et le tube (12) étant disposés et aménagés sur une sole métallique comme indiqué sur la figure 4b. Les détails de préparation et de montage, qui sont évidents pour l'homme du métier par simple examen des figures, ne seront pas mentionnés ici.

On a calculé qu'un échangeur hélicoïdal équivalent, mais selon l'art antérieur, aurait une pente moyenne de 30,73°, une épaisseur d'ailette de 14,38 mm et une surface d'échange de $13,4 \cdot 10^{-3}$ m$^2$ (face supérieure de l'ailette).

Tests réalisés :

Le dispositif fabriqué a été testé en étudiant l'échauffement et la désorption d'une solution aqueuse de LiBr (6) , le fluide caloporteur (7) étant de l'eau.

Les mesures ont porté sur la valeur du coefficient de transfert de chaleur h a l'interface "film ruisselant - ailette" en fonction du nombre de Reynolds Re qui caractérise un écoulement de liquide.

Résultats expérimentaux :

A noter tout d'abord les observations qui suivent sur l'hydrodynamique du film ruisselant sur le support en escalier en colimaçon

*    en dessous d'un premier débit critique, le film ruisselle sur la face supérieure de l'ailette.
*    quand on augmente ce premier débit critique, le film déborde et ruisselle aussi sur la face inférieure, de sorte que l'ailette est entièrement mouillée par le film.
*    quand on dépasse un deuxième débit critique, le film décolle de l'ailette au centre du tube.

Comme le premier débit critique est très faible, et que le deuxième est relativement élevé, le film ruisselle sur les deux faces de l'ailette dans la plus grande partie du domaine de variation du débit, ce qui assure un transfert thermique très élevé.

On a représenté aux figures 10a et 10b les résultats obtenus d'une part, avec le contacteur gaz-liquide de l'exemple 1 (courbes I et points marqués par "o" sur les graphiques), d'autre part, avec un tube droit à paroi lisse, en même matériau, de même hauteur et de même rayon intérieur (25 mm) servant de témoin (courbes II et points notés "x").

La figure 10a est relative à l'échauffement de film ruisselant et la figure 10b à la désorption (séparation de vapeur d'eau). On peut noter que le contacteur gaz-liquide selon l'invention permet, d'une part d'obtenir des écoulements dans un large domaine de Re (contrairement au tube droit), et d'autre part d'obtenir des valeurs de h très élevées, qui confirment les hypothèses faites et montrent l'intérêt d'un écoulement de film présentant une alternance et une proportion ad hoc des deux types-limites d'écoulement déjà évoqués, l'écoulement de type "piston" et celui de type "mélangeur parfait".

Bien que cela eût été souhaitable, il n'a pas été possible de réaliser, compte tenu de la difficulté technique, un essai témoin avec un tube à canal hélicoïdal intérieur sans marches (support lisse).

EXEMPLE 2

On a fabriqué 3 contacteurs gaz-liquide (notés M1, M2, M3) selon la seconde modalité de l'invention, analogues à celui représenté à la figure 6 et variant par l'angle Phi comme représenté à la figure 5c.

Pour cela, on a fabriqué 150 (3 x 50) plaquettes en cuivre, ayant la forme de la plaquette décrite à la figure 5a, par estampage d'une plaque de cuivre de 2 mm d'épaisseur (Ep). L'outil d'estampage permet de former une rainure circulaire (21) de 0,4 mm de profondeur et de 2 mm de large.

Autres paramètres géométriques de la plaquette :

*    Angle B = 25°
*    Rayon extérieur Re de la plaquette = 15 mm
*    Rayon intérieur Ri de la partie annulaire = 10 mm
*    Rayon Rs de l'ailette = 50 mm

On a ensuite fabriqué 3 contacteurs gaz-liquide (1) analogues à celui représenté à la figure 6 avec les paramètres suivants

*    hauteur de l'empilement de plaquettes : 120 mm.
*    nombre de plaquettes : 50
*    étanchéité par joint annulaire de 0,4 mm d'épaisseur (comprimé)

| * | angle Phi | nombre de spires | surface ailette (A) |
|---|---|---|---|
| M1 | 40° | 5,5 | 0,047 m$^2$ |
| M2 | 30° | 4,3 | 0,027 m$^2$ |
| M3 | 15° | 2 | 0,014 m$^2$ |
| * tube extérieur (12) en matériau plastique isolant transparent. | | | |

Tests réalisés :

Les contacteurs gaz-liquide fabriqués (M1/M2/M3) ont été testés en étudiant l'échauffement de l'eau (6), le fluide caloporteur (7) étant de l'eau.

Les mesures ont porté sur la valeur du coefficient de transfert de chaleur h (en kW/m2.°K) à l'interface "film ruisselant - ailette" (figure 11a) et la HUT (en m) (figure 11b) en fonction du nombre de Reynolds Re qui caractérise l'écoulement de l'eau.

Résultats expérimentaux :

On a observé, comme dans l'exemple précédent, et en fonction du débit, l'hydrodynamique du film ruisselant sur le support en escalier en colimaçon. On observe, comme dans le cas de l'exemple 1, la présence de débits critiques.

Les mesures de transfert de chaleur, caractérisé par h et HUT, ont été réalisées avec des contacteurs M1, M2 et M3 équipés d'un tube externe (12) tangent à l'extrémité des ailettes extérieures (11), de sorte que les écoulements de liquide (6) (eau) avaient lieu sans débordement.

On a représenté aux figures 11a et 11b les résultats obtenus d'une part, avec les contacteur M1, M2 et M3 de l'exemple 2 (courbes M1, M2 et M3 - points notés "o" sur les graphiques), d'autre part, avec des échangeurs témoins, un tube droit en même matériau, de même hauteur et diamètre extérieur servant de trémoin et désigné par "TL" (courbe TL - points notés "x"), et un échangeur graphite à canal hélicoïdal selon l'art antérieur cité et désigné par G2 (courbe G2 - points notés "●").

Cet échangeur G2 a les caractéristiques suivantes :

| | |
|---|---|
| * rayon du tube de base | 30 mm |
| * rayon extérieur | 70 mm |
| * largeur de l'ailette | 40 mm |
| * pas de l'ailette | 16 mm |
| * angle de pente moyen | 3° |
| * hauteur | 120 mm |

En ce qui concerne les valeurs du coefficient h (figure 11a), on peut noter qu'il est assez peu sensible au débit (proportionnel à Re), mais que, par contre, il varie beaucoup quand augmente la densité linéaire de promoteurs de turbulence : le contacteur à marches d'escaliers espacées (M1) présente des valeurs du coefficient h voisines de celles d'échangeurs à paroi lisse (TL) ou à paroi spiralée lisse (G2). Au contraire, les contacteurs M2 et M3, à forte pente, donc avec une grande densité de marches d'escalier présentent des valeurs de h 3 à 4 fois supérieures, comparables à celles obtenues à l'exemple 1.

En ce qui concerne la HUT (figure 11b), on remarque que les 3 contacteurs de l'invention sont nettement plus performants que les échangeurs témoins.

Cependant il importe de noter que le contacteur M2 est le plus performant des 3 contacteurs selon l'invention, sur ce critère global (HUT est inversement proportionnel à h. A, A étant l'aire de contact film - support). Ceci montre que dans le cas de M3, la valeur de h plus élevée, due à une forte pente, n'a pas suffi à compenser la diminution de A. Ainsi, il existe donc, pour des conduitions opératoires données, une valeur de l'angle Phi optimum.

Des essais complémentaires réalisés avec débordement ont montré que la performance du contacteur était encore améliorée lorsque le film ruisselant s'écoulait aussi sur la surface inférieure des ailettes.

EXEMPLE 3

On a fabriqué un contacteur gaz-liquide selon la troisième modalité de l'invention (première variante), analogue à celui représenté à la figure 7b.

Pour cela, on a fabriqué 50 plaquettes en cuivre, ayant la forme de la plaquette décrite à la figure 7a, à partir d'une plaque de cuivre de 4 mm d'épaisseur (Ep).

Autres paramètres (notations de la figure 7a) :

* D1 = 4 cm
* D2 = 6 cm
* D3 = 8 cm
* D4 = 10 cm
* trou central 5 mm de diamètre
* angle d'un secteur plein : 50°
* angle d'un secteur ajouré : 75°

On a monté ces 50 plaquettes sur une tige centrale à extrémités filetées (30) de 4 mm de diamètre, avec un angle Phi de 60°, en intercalant entre chaque plaquette un joint annulaire (21). On a obtenu un contacteur gaz-liquide de 220 mm de longueur, après compression des plaquettes (serrage de la tige filetée).

On a obtenu des valeurs de h de l'ordre de 5 à 10 kW/m2.°K. Les calculs ont montré qu'avec le cuivre comme matériau, la conductance de transfert de chaleur entre canaux (16) extérieurs et centraux, était de l'ordre de 30 kW/m2.°K, donc supérieure à la valeur de h, et n'était donc pas un facteur limitatif du transfert de chaleur. Par contre, avec le graphite comme matériau, la conductance de transfert de chaleur entre canaux est voisine de h.

AVANTAGES DE L'INVENTION

L'invention décrit un nouveau concept de contacteur gaz-liquide qui présente les avantages essentiels suivants par rapport à l'art antérieur :

- avantage économique (déjà développé), et facilité d'automatiser la fabrication des oontacteurs selon l'invention,
- avantage technique, comme montré par les exemples (grande capacité d'échange / unité de volume),
- très grande richesse du concept de base conduisant à une grande variété de contacteurs en fonction des besoins à satisfaire.

**Revendications**

1. Contacteur gaz-liquide à film ruisselant, pour transferts de matière et de chaleur entre gaz et liquide, comprenant un support hélicoïdal, en matériau conducteur thermique, permettant l'écoulement par gravité, sous forme de film ruisselant, d'un liquide à traiter (évaporation ou absorption), une paroi, en matériau conducteur thermique et en contact thermique avec ledit support, séparant de manière étanche ledit liquide et un fluide caloporteur, caractérisé en ce que, ledit support hélicoïdal dudit liquide et ladite paroi sont formés par un empilement vertical de plaquettes ajourées et en matériau conducteur thermique, décalées angulairement d'un angle Phi les unes par rapport aux autres par rotation selon l'axe dudit support hélicoïdal, ledit angle Phi étant compris entre 6° (60 plaquettes par spire) et 90° (4 plaquettes par spire), chaque plaquette formant ainsi un élément dudit support, comme une marche d'un escalier en colimaçon, et un élément de ladite paroi, à l'aide de moyens assurant l'assemblage solide et étanche desdites plaquettes.

2. Contacteur gaz-liquide selon la revendication 1 dans lequel le décalage angulaire Phi entre deux plaquettes successives dudit empilement est compris entre 10° (36 plaquettes par spire) et 36° (10 plaquettes par spire).

3. Contacteur gaz-liquide selon l'une des revendications 1 et 2 dans lequel ledit empilement est formé de plaquettes ajourées identiques entre elles et planes.

4. Contacteur gaz-liquide selon une quelconque des revendications 1 à 3 dans lequel ladite plaquette comprend une partie annulaire formant un élément de ladite paroi et munie intérieurement d'au moins une ailette intérieure formant un élément dudit support, de manière à obtenir, par empilement desdites plaquettes, un tube à l'intérieur duquel s'écoule ledit liquide, et dont la surface externe est en contact avec ledit fluide caloporteur.

5. Contacteur gaz-liquide selon une quelconque des revendications 1 à 3 dans lequel ladite plaquette comprend une partie annulaire formant un élément de ladite paroi et munie extérieurement d'au moins une ailette extérieure formant un élément dudit support, de manière à obtenir, par empilement desdites plaquettes, un tube muni à sa surface externe d'un support hélicoïdal destiné à l'écoulement dudit liquide, et dont la surface interne est en contact avec ledit fluide caloporteur.

6. Contacteur gaz-liquide selon une quelconque des revendications 1 à 3 dans lequel ladite plaquette est constituée par une plaque cylindrique ajourée munie d'au moins deux orifices distincts, de manière à obtenir, par empilement desdites plaquettes, un cylindre muni à l'intérieur d'au moins deux canaux hélicoïdaux permettant l'écoulement en parallèle dudit liquide et dudit fluide caloporteur.

7. Contacteur gaz-liquide selon la revendication 4 dans lequel le rapport Re/Ep, Re étant le rayon extérieur de ladite partie annulaire et Ep étant l'épaisseur de ladite plaquette, est compris entre 4 et 20, et de préférence entre 6 et 10.

8. Contacteur gaz-liquide selon la revendication 7 dans lequel le rapport Eb/Ep, Eb désignant la largeur de ladite partie annulaire (différence entre Re, rayon extérieur, et Ri, rayon intérieur) est compris entre 0,5 et 5, et de préférence entre 1 et 2.

9. Contacteur gaz-liquide selon la revendication 8 dans lequel ladite ailette intérieure a la forme d'une portion de couronne ou d'un secteur, l'angle A dudit secteur, ou la somme des angles desdits secteurs au cas où ladite plaquette comprend plus d'un secteur, est compris entre 60 et 200°, et de préférence compris entre 100 et 160°.

10. Contacteur gaz-liquide selon une quelconque des revendications 4, 7, 8 et 9 comprenant une enveloppe cylindrique isolante entourant de manière concentrique ledit empilement avec un intervalle entre ladite paroi et ladite enveloppe permettant la circulation dudit fluide caloporteur entre ladite paroi et ladite enveloppe.

11. Contacteur gaz-liquide selon la revendication 10 dans lequel ladite partie annulaire comprend extérieurement au moins deux ailettes symétriques par rapport à l'axe dudit support hélicoïdal, de manière à faciliter le centrage et le montage desdites plaquettes à l'intérieur de ladite enveloppe cylindrique isolante, et à obtenir une circulation hélicoïdale dudit fluide caloporteur entre ledit tube et ladite enveloppe isolante.

12. Contacteur gaz-liquide selon la revendication 5 dans lequel ladite ailette extérieure a la forme d'un secteur limité, dans le sens radial, par deux côtés tangents audit bord annulaire, et faisant entre eux un angle B compris entre -30° et + 90°, et de préférence compris entre 0 et 40°.

13. Contacteur gaz-liquide selon la revendication 12 dans lequel ladite ailette extérieure a la forme d'un secteur limité, dans le sens tangentiel, par un arc de cercle de rayon Rs dont le centre est celui de ladite partie annulaire.

14. Contacteur gaz-liquide selon la revendication 13 dans lequel le rapport Rs/Ep, Ep étant l'épaisseur de ladite plaquette, est compris entre 3 et 30, et de préférence entre 5 et 20.

15. Contacteur gaz-liquide selon la revendication 14 dans lequel le rapport Eb/Ep, Eb désignant la largeur de ladite partie annulaire (différence entre Re, rayon extérieur, et Ri, rayon intérieur) est compris entre 0,2 et 3, et de préférence entre 0,5 et 2.

16. Contacteur gaz-liquide selon la revendication 15 dans lequel ladite plaquette comprend deux ailettes extérieures symétriques par rapport à l'axe dudit support hélicoïdal.

17. Contacteur gaz-liquide selon une quelconque des revendications 12 à 16 comprenant une enveloppe cylindrique isolante tangente intérieurement aux extrémités desdites ailettes extérieures.

18. Contacteur gaz-liquide selon une quelconque des revendications 12 à 16 dans lequel ladite partie annulaire comprend intérieurement au moins une ailette intérieure, de manière à assurer un écoulement hélicoïdal dudit fluide caloporteur, et éventuellement un centrage aisé desdites plaquettes.

19. Contacteur gaz-liquide selon la revendication 6 dans lequel lesdits orifices ont la forme de portions d'anneaux ou de secteurs limités, dans le sens radial, par deux segments de droites concourants selon l'axe dudit support hélicoïdal, et dans le sens tangentiel, par deux arcs de cercle.

20. Contacteur gaz-liquide selon la revendication 19 dans lequel ladite plaquette comprend 2.n orifices distincts avec une symétrie axiale d'ordre n par rapport à l'axe dudit support hélicoïdal (superposition par rotation de 360°/n), n orifices étant destinés à l'écoulement dudit liquide et n orifices étant destinés à l'écoulement dudit fluide caloporteur, avec n supérieur à 1 et de préférence égal à 2 ou à 3.

21. Contacteur gaz-liquide selon la revendication 20 dans lequel les n orifices destinés à l'écoulement dudit liquide sont situés sur la partie annulaire extérieure de ladite plaquette, alors que les orifices destinés à l'écoulement dudit fluide caloporteur sont situés sur la partie circulaire intérieure de ladite plaquette.

22. Contacteur gaz-liquide selon la revendication 20 dans lequel les 2.n orifices forment une succession de secteurs creux séparés par des secteurs pleins destinées à assurer l'étanchéité entre secteurs creux.

23. Contacteur gaz-liquide selon la revendication 6 dans lequel ladite plaquette comprend deux parties annulaires concentriques séparées par une zone annulaire étanche, l'une, intérieure, portant une ailette destinée à l'écoulement dudit liquide, l'autre, extérieure, munie d'un orifice à la partie supérieure de la plaquette débouchant sur une gorge circulaire située à la partie inférieure de la plaquette, de manière à permettre la circulation dudit fluide caloporteur sur tout ou partie de la circonférence de la partie annulaire extérieure.

24. Contacteur gaz-liquide selon la revendication 23 dans lequel ladite ailette présente une extrémité en arc de cercle et comprenant un noyau cylindrique axial (34) de manière à former un canal hélicoïdal sans communication verticale directe.

25. Contacteur gaz-liquide selon la revendication 23 dans lequel ladite ailette a une section verticale radiale de forme trapézoïdale, de manière à favoriser l'écoulement dudit liquide sur la face inférieure de ladite ailette, par débordement dudit liquide.

26. Contacteur gaz-liquide selon une quelconque des revendications 1 à 25 dans lequel l'épaisseur de la plaquette Ep est comprise entre 0,5 et 20 mm et de préférence comprise entre 1 et 10 mm.

27. Contacteur gaz-liquide selon la revendication 26 dans lequel la hauteur dudit empilement est comprise entre 200 et 2000 mm.

28. Contacteur gaz-liquide selon la revendication 27 dans lequel ledit matériau conducteur thermique est choisi parmi les métaux ou alliages métalliques, le graphite.

29. Contacteur gaz-liquide selon la revendication 28 dans lequel on choisit de préférence, comme matériau conducteur thermique, le cuivre et alliages de cuivre, l'aluminium et alliages d'aluminium, ou l'acier inoxydable quand est recherchée une résistance élevée à la corrosion.

30. Contacteur gaz-liquide selon une quelconque des revendications 1 à 29 dans lequel, de manière à ce que ledit liquide et ledit fluide caloporteur ne puissent se mélanger, l'étanchéité de ladite paroi est assurée à l'aide de moyens connus en eux-mêmes, typiquement à l'aide de rainures radiales ou circulaires à la surface de ladite plaquette, de joints-plans minces en matériau plastique ou en graphite expansé recomprimé, par collage, par soudure, et l'assemblage solide des plaquettes est obtenu par les moyens connus en eux-mêmes, typiquement à l'aide de tiges filetées permettant de maintenir comprimé ledit empilement.

31. Contacteur gaz-liquide selon une quelconque des revendications 1 à 30 comprenant des moyens pour assurer l'alimentation et la circulation dudit liquide et dudit fluide caloporteur, ainsi que la circulation des vapeurs surmontant ledit liquide.

32. Utilisation d'un contacteur gaz-liquide selon une quelconque des revendications 1 à 31 pour séparer par évaporation-condensation un mélange liquide dont certains constituants sont volatils et d'autres pas.

33. Utilisation d'un contacteur gaz-liquide selon une quelconque des revendications 1 à 31 pour absorber une vapeur, pure ou diluée au sein d'un gaz inerte, dans un liquide absorbant non volatil, absorption qui peut être suivie d'une réaction en phase liquide exo- ou endothermique.

**Claims**

1. A trickling film gas-liquid contactor for the transfer of matter and heat between gas and liquid, comprising a helical support of heat conducting material permitting a liquid to be treated (evaporation or absorption) to flow by force of gravity in the form of a trickling film, a wall of heat conducting material in thermal contact with the said support, separating in sealed fashion the said liquid and a heat-carrying fluid, characterised in that said helical support of said liquid and said wall are formed by a vertical stack of open work plates of heat conducting material, offset angularly in respect of one another by an angle Phi by rotation about the axis of said helical support, said angle Phi being between 6° (60 plates per turn) and 90° (4 plates per turn) each plate thus forming an element of said support, like a step on a spiral staircase, and an element of said wall, by means ensuring the rigid and sealed assembly of said plates.

2. A gas-liquid contactor according to claim 1, in which the angular offset Phi between two successive plates of said stack is between 10° (36 plates per turn) and 36° (10 plates per turn).

3. A gas-liquid contactor according to one of claims 1 and 2 wherein said stack consists of plane and open work plates which are identical to one another.

4. A gas-liquid contactor according to any one of claims 1 to 3, wherein said plate comprises an annular part forming an element of said wall and provided on the inside with at least one inner fin forming an element of said support in order, by stacking of said plates, to obtain a tube inside which said liquid flows and the outer surface of which is in contact with said heat-carrying fluid.

5. A gas-liquid contactor according to any one of claims 1 to 3 wherein said plate comprises an annular part forming an element of said wall and provided on the outside with at least one external fin forming an element of said support in order, by stacking of said plates, to obtain a tube having on its outer surface a helical support intended for the flow of said liquid and of which the inner surface is in contact with said heat-carrying fluid.

6. A gas-liquid contactor according to any one of claims 1 to 3 wherein said plate is constituted by an omen work cylindrical plate provided with at least two distinct orifices in order to obtain by stacking of said plates a cylinder provided on the inside with at least two helical passages allowing the parallel flow of said liquid and of said heat-carrying fluid.

7. A gas-liquid contactor according to claim 4 wherein ratio Re:Ep, Re being the outside radius of said annular part and Ep being the thickness of said plate, is comprised between 4 and 20 and preferably between 6 and 10.

8. A gas-liquid contactor according to claim 7 wherein the ratio Eb:Ep, Eb designating the width of said annular part (difference between Re, outside radius, and Ri, inside radius) is comprised between 0.5 and 5 and preferably between 1 and 2.

9. A gas-liquid contactor according to claim 8 wherein said inner fin takes the form of a portion of a ring or a sector, the angle A of said sector or the sum of the angles of said sectors in the case of a plate comprising more than one sector, is comprised between 60 and 200° and is preferably comprised between 100 and 160°.

10. A gas-liquid contactor according to any one of claims 4, 7, 8 and 9 comprising an insulating cylindrical casing concentrically surrounding said stack with a gap between said wall and said casing to allow the circulation of said heat-carrying fluid between said wall and said casing.

11. A gas-liquid contactor according to claim 10 wherein said annular part comprises on the outside at least two fins which are symmetrical in respect of the axis of said helical support in order to facilitate centring and mounting of said plates on the inside of said insulating cylindrical casing and in order to achieve a helical circulation of said heat-carrying fluid between said tube and said insulating casing.

12. A gas-liquid contactor according to claim 5 wherein said outer fin takes the form of a sector bounded in the radial direction by two sides tangent on said annular edge and making between them an angle B comprised between -30° and +90° and preferably between 0 and 40°.

13. A gas-liquid contactor according to claim 12 wherein said outer fin takes the form of a sector bounded in the tangential direction by an arc of a circle of radius Rs the centre of which is that of said annular part.

14. A gas-liquid contactor according to claim 13 wherein ratio Rs:Ep, Ep being the thickness of said plate, is comprised between 3 and 30 and preferably between 5 and 20.

15. A gas-liquid contactor according to claim 14 wherein the ratio Eb:Ep, Eb designating the width of said annular part (difference between Re, outside radius, and Ri, inside radius) is comprised between 0.2 and 3 and preferably between 0.5 and 2.

16. A gas-liquid contactor according to claim 15 wherein said plate comprises two outer fins symmetrical in respect of the axis of said helical support.

17. A gas-liquid contactor according to any one of claims 12 to 16 comprising an insulating cylindrical casing internally tangent on the ends of said external fins.

18. A gas-liquid contactor according to any one of claims 12 to 16 wherein said annular part comprises on the inside at least one inner fin in order to ensure a helical flow of said heat-carrying fluid and possibly an easy centring of said plates.

19. A gas-liquid contactor according to claim 6 wherein said orifices take the form of portions of rings or sectors which in the radial direction are bounded by two segments of straight lines concurrent with the axis of the said helical support and in the tangential direction by two arcs of a circle.

20. A gas-liquid contactor according to claim 19 wherein said plate comprises 2.n distinct orifices with an axial symmetry of the order n in respect of the axis of said helical support (superimposition by rotation of 360°/n), n orifices being intended for the flow of said liquid and n orifices being intended for the flow of said heat-carrying fluid, with n greater than 1 and preferably equal to 2 or 3.

21. A gas-liquid contactor according to claim 20 wherein n orifices intended for the flow of said liquid are situated on the outer annular part of said plate, while the orifices intended for the flow of said heat-carrying fluid are situated on the inner circular part of said plate.

22. A gas-liquid contactor according to claim 20 wherein the 2.n orifices form a succession of hollow sectors separated by solid sectors intended to ensure the seal between hollow sectors.

23. A gas-liquid contactor according to claim 6 wherein said plate comprises two concentric annular parts separated by a sealed annular zone, one on the inside carrying a fin intended for the flow of said liquid, the other on the outside provided with an orifice in the upper part of the plate discharging onto a circular groove situated in the bottom part of the plate in order to allow the circulation of said heat-carrying fluid over all or part of the circumference of the outer annular part.

24. A gas-liquid contactor according to claim 23 wherein said fin has one end as an arc of a circle and comprising an axial cylindrical core (34) so as to form a helical passage with no direct vertical communication.

25. A gas-liquid contactor according to claim 23 wherein said fin has a radial vertical cross-section of trapezoidal form, in such a way as to facilate the flow of said liquid over the underside of said fin, by overspill of the said liquid.

26. A gas-liquid contactor according to any one of claims 1 to 25 wherein the thickness of the plate Ep is comprised between 0.5 and 20 mm and preferably between 1 and 10 mm.

27. A gas-liquid contactor according to claim 26 wherein the height of said stack is comprised between 200 and 2000 mm.

28. A gas-liquid contactor according to claim 27 wherein said heat conducting material is chosen from among the metals or metallic alloys, graphite.

29. A gas-liquid contactor according to claim 28 wherein preferably copper and copper alloys, aluminium and aluminium alloys or stainless steel when a high resistance to corrosion is desired, are chosen as the heat conducting material.

30. A gas-liquid contactor according to any one of claims 1 to 29 in which, so that said liquid and said heat-carrying fluid cannot mix, the seal of said wall is ensured by means known per se, typically with the help of radial or circular grooves on the surface of said plate, thin flat seals of plastic material or expanded and recompressed graphite, adhesion, welding, a solid assembly of plates being obtained by means known per se, typically with the help of screw threaded rods which make it possible to keep the stack compressed.

31. A gas-liquid contactor according to any one of claims 1 to 30 comprising means of ensuring the supply and circulation of said liquid and of heat-carrying fluid and the circulation of the vapours surmounting said liquid.

32. Use of a gas-liquid contactor according to any one of claims 1 to 31 to separate by evaporation-condensation a liquid mixture of which certain constituents are volatile while others are not.

33. Use of a gas-liquid contactor according to any one of claims 1 to 31 for absorbing a vapour, pure or diluted within an inert gas, in a non-volatile absorbent liquid, which absorption may be followed by an exothermic or endothermic reaction in liquid phase.

**Patentansprüche**

1. Einrichtung mit Rieselfilm für den Gas-Flüssigkeits-Kontakt, für Stoff- und Warmeübertragungen zwischen dem Gas und der Flüssigkeit, mit einem wendelförmigen Träger aus wärmeleitfähigem Material, der das schwerkraftbedingte Abfließen einer zu behandelnden (Verdampfung oder Absorption) Flüssigkeit in Form eines Rieselfilmes gestattet, einer Wand aus wärmeleitfähigem Material und in thermischem Kontakt mit dem genannten Träger, die dichtend die genannte Flüssigkeit und ein wärmeförderndes Strömungsmittel trennt, dadurch gekennzeichnet, daß der genannte wendelförmige Träger für die genannte Flüssigkeit sowie die genannte Wand durch vertikale Stapel von gelochten und aus wärmeleitfähigem Material gebildeten Plättchen gebildet sind, die durch Drehung um die Achse des genannten wendelförmigen Trägers winklig um einen Winkel Phi zueinander versetzt sind, wobei der genannte Winkel Phi zwischen 6° (60 Plättchen pro Windung) und 90° (4 Plättchen pro Windung) liegt, und wobei jedes Plättchen somit ein Element des genannten Trägers, wie der Verlauf einer Wendeltreppe, sowie ein Element der genannten Wand bildet, mit Hilfe von Mitteln, die den festen und dichten Zusammenbau der genannten Plättchen sicherstellen.

2. Einrichtung für den Gas-Flüssigkeits-Kontakt nach Anspruch 1, worin die winklige Versetzung Phi zwischen zwei aufeinanderfolgenden Plättchen des genannten Stapels zwischen 10° (36 Plättchen pro Windung) und 36° (10 Plättchen pro Windung) liegt.

3. Einrichtung für den Gas-Flüssigkeits-Kontakt nach einem der Ansprüche 1 und 2, worin der genannte Stapel aus zueinander identischen und ebenen, gelochten Plättchen gebildet ist.

4. Einrichtung für den Gas-Flüssigkeits-Kontakt nach irgendeinem der Ansprüche 1 bis 3, worin das genannte Plättchen einen ringförmigen Abschnitt aufweist, der ein Element der genannten Wand bildet, und auf der Innenseite mit mindestens einem inneren Steg versehen ist, der ein Element des genannten Trägers bildet, und zwar derart, daß man durch Stapelung der genannten Plättchen ein Rohr erhält, an dessen Innenseite die genannte Flüssigkeit abfließt und dessen Aussenfläche in Berührung mit dem genannten, wärmefördernden Strömungsmittel steht.

5. Einrichtung für den Gas-Flüssigkeits-Kontakt nach irgendeinem der Ansprüche 1 bis 3, worin das genannte Plättchen einen ringförmigen Abschnitt aufweist, der ein Element der genannten Wand bildet, und auf der Außenseite mit mindestens einem äußeren Steg versehen ist, der ein Element des genannten Trägers bildet, und zwar derart, daß man durch Stapelung der genannten Plättchen ein Rohr erhält, das an seiner Außenflache mit einem wendelförmigen Träger ausgestattet ist, der zum Abfließen der genannten Flüssigkeit bestimmt ist, und dessen Innenfläche in Berührung mit dem genannten wärmefördernden Strömungsmittel steht.

6. Einrichtung für den Gas-Flüssigkeits-Kontakt nach irgendeinem der Ansprüche 1 bis 3, worin das genannte Plättchen von einer gelochten, zylindrischen Platte gebildet ist, die mindestens mit zwei gesonderten Öffnungen versehen ist, und zwar derart, daß man durch Stapelung der genannten Plättchen einen Zylinder erhält, der an der Innenseite mit mindestens zwei wendelförmigen Kanälen versehen ist, die das parallele Abfließen der genannten Flüssigkeit und des genannten, wärmefördernden Strömungsmittels gestatten.

7. Einrichtung für den Gas-Flüssigkeits-Kontakt nach Anspruch 4, worin das Verhaltnis Re/Ep, in dem Re der Außenradius des genannten ringförmigen Abschnitts und Ep die Dicke des genannten Plättchens ist, zwischen 4 und 20 sowie bevorzugt zwischen 6 und 10 liegt.

8. Einrichtung für den Gas-Flüssigkeits-Kontakt nach Anspruch 7, worin das Verhältnis Eb/Ep, in dem Eb die Breite des genannten ringförmigen Abschnitts bezeichnet (Differenz zwischen Re, dem Außenradius, und Ri, dem Innneradius), zwischen 0,5 und 5 sowie bevorzugt zwischen 1 und 2 liegt.

9. Einrichtung für den Gas-Flüssigkeits-Kontakt nach Anspruch 8, worin der genannte Innensteg die Form eines Kranzabschnitts oder eines Sektors hat, wobei der Winkel A des genannten Sektors, oder die Summe der Winkel der genannten Sektoren in dem Fall, in dem das genannte Plättchen mehr als einen Sektor aufweist, zwischen 60 und 200° und bevorzugt zwischen 100 und 160° liegt.

10. Einrichtung für den Gas-Flüssigkeits-Kontakt nach irgendeinem der Ansprüche 4, 7, 8 und 9, mit einer zylindrischen, isolierenden Umhüllung, die konzentrisch den genannten Stapel mit einem Abstand zwischen der genannten Wand und der genannten Umhüllung umgibt und den Umlauf des genannten, wärmefördernden Strömungsmittels zwischen der genannten Wand und der genannten Umhüllung gestattet.

11. Einrichtung für den Gas-Flüssigkeits-Kontakt nach Anspruch 10, worin der genannte ringförmige Abschnitt an der Außenseite mindestens zwei in Bezug auf die Achse des genannten wendelförmigen Trägers symmetrische Stege derart aufweist, daß die Zentrierung und Montage der genannten Plättchen im Inneren der genannten, zylindrischen, isolierenden Umhüllung erleichtert ist, und daß man einen wendelförmigen Umlauf des genannten, wärmefördernden Strömungsmittels zwischen dem genannten Rohr und der genannten, isolierenden Umhüllung zu erhält.

12. Einrichtung für den Gas-Flüssigkeits-Kontakt nach Anspruch 5, worin der genannte, äußere Steg die Form eines Sektors aufweist, der in radialer Richtung durch zwei Seiten begrenzt ist, die den ringförmigen Rand tangieren, die zwischeneinander einen Winkel B bilden, der zwischen -30° und +90° und bevorzugt zwischen 0 und 40° liegt.

13. Einrichtung für den Gas-Flüssigkeits-Kontakt nach Anspruch 12, worin der genannte, äußere Steg die Form eines Sektors aufweist, der in tangentialer Richtung durch einen Kreisbogen mit dem Radius Rs begrenzt ist, dessen Mitte die des genannten, ringförmigen Abschnitts ist.

14. Einrichtung für den Gas-Flüssigkeits-Kontakt nach Anspruch 13, worin das Verhältnis Rs/Ep, in dem Ep die Dicke des genannten Plättchens ist, zwischen 3 und 30 und bevorzugt zwischen 5 und 20 beträgt.

15. Einrichtung für den Gas-Flüssigkeits-Kontakt nach Anspruch 14, worin das Verhältnis Eb/Ep, in dem Eb die Breite des genannten ringförmigen Abschnitts bezeichnet (Differenz zwischen Re, dem Außenradius, und Ri, dem Innenradius), zwischen 0,2 und 3 und bevorzugt zwischen 0,5 und 2 liegt.

16. Einrichtung für den Gas-Flüssigkeits-Kontakt nach Anspruch 15, worin das genannte Plättchen zwei äußere, in Bezug auf die Achse des genannten wendelförmigen Trägers symmetrische Stege aufweist.

17. Einrichtung für den Gas-Flüssigkeits-Kontakt nach irgendeinem der Ansprüche 12 bis 16, mit einer zylindrischen, isolierenden Umhüllung, die innen die Enden der genannten äußeren Stege tangiert.

18. Einrichtung für den Gas-Flüssigkeits-Kontakt nach irgendeinem der Ansprüche 12 bis 16, worin der genannte ringförmige Abschnitt auf der Innenseite mindestens einen inneren Steg derart aufweist, daß ein wendelförmiges Abfließen des genannten, wärmefördernden Strömungsmittels sichergestellt ist, und gegebenenfalls eine erleichterte Zentrierung der genannten Plattchen.

19. Einrichtung für den Gas-Flüssigkeits-Kontakt nach Anspruch 6, worin die genannten Öffnungen die Form von Ringabschnitten oder Sektoren aufweisen, die in radialer Richtung durch zwei Segmente von Geraden, die durch die Achse des genannten wendelförmigen Trägers hindurchlaufen, und in tangentialer Richtung durch zwei Kreisbogen begrenzt sind.

20. Einrichtung für den Gas-Flüssigkeits-Kontakt nach Anspruch 19, worin das genannte Plättchen 2.n getrennte Öffnungen mit axialer Symmetrie n-ter Ordnung in Bezug auf die Achse des genannten wendelförmigen Trägers aufweist (Überlagerung durch Drehung um 360°/n), wobei n Öffnungen für das Abfließen der genannten Flüssigkeit und n Öffnungen für das Abfließen des genannten wärmefordernden Strömungsmittels bestimmt sind, wobei n größer ist als 1 und bevorzugt gleich 2 oder 3 ist.

21. Einrichtung für den Gas-Flüssigkeits-Kontakt nach Anspruch 20, worin die n Öffnungen, die zum Abfließen der genannten Flüssigkeit bestimmt sind, auf dem äußeren ringförmigen Abschnitt des genannten Plättchens gelegen sind, während die Öffnungen, die zum Abfließen des genannten, wärmefördernden Strömungsmittels bestimmt sind, auf dem inneren, kreisförmigen Abschnitt des genannten Plättchens gelegen sind.

22. Einrichtung für den Gas-Flüssigkeits-Kontakt nach Anspruch 20, worin die 2.n Öffnungen eine Folge von hohlen Sektoren bilden, die durch volle Sektoren getrennt sind, die dazu bestimmt sind, die Abdichtung zwischen den hohlen Sektoren sicherzustellen.

23. Einrichtung für den Gas-Flüssigkeits-Kontakt nach Anspruch 6, worin das genannte Plättchen zwei ringförmige, konzentrische Abschnitte aufweist, die durch eine dichte, ringförmige Zone getrennt sind, wobei der eine, innere einen Steg trägt, der zum Abfließen der genannten Flüssigkeit bestimmt ist, während der andere, äußere mit einer Öffnung am oberen Abschnitt des Plättchens versehen ist, die in eine kreisförmige Nut einmündet, die am unteren Abschnitt des Plättchens gelegen ist, und zwar derart, daß der Umlauf des genannten, wärmefordernden Strömungsmittels über den ganzen Umfang oder einen Teil des Umfangs des ringförmigen, äußeren Abschnitts gestattet ist.

24. Einrichtung für den Gas-Flüssigkeits-Kontakt nach Anspruch 23, worin der genannte Steg ein kreisbogenförmiges Ende darbietet und einen axialen, zylindrischen Kern (34) aufweist, und zwar derart, daß ein wendelförmiger Kern ohne unmittelbare vertikale Verbindung gebildet ist.

25. Einrichtung für den Gas-Flüssigkeits-Kontakt nach Anspruch 23, worin der genannte Steg einen vertikalen, trapezförmigen Radialschnitt aufweist, und zwar derart, daß das Abfließen der genannten Flüssigkeit auf der Innenoberfläche des genannten Steges durch Überlauf der genannten Flüssigkeit begünstigt ist.

26. Einrichtung für den Gas-Flüssigkeits-Kontakt nach irgendeinem der Ansprüche 1 bis 25, worin die Dicke des Plättchens Ep zwischen 0,5 und 20 mm und bevorzugt zwischen 1 und 10 mm liegt.

27. Einrichtung für den Gas-Flüssigkeits-Kontakt nach Anspruch 26, worin die Höhe des genannten Stapels zwischen 200 und 2000 mm liegt.

28. Einrichtung für den Gas-Flüssigkeits-Kontakt nach Anspruch 27, worin das genannte wärmeleitfähige Material unter den Metallen oder Metallegierungen und Graphit gewählt ist.

29. Einrichtung für den Gas-Flüssigkeits-Kontakt nach Anspruch 28, worin man bevorzugt als wärmeleitfähiges Material Kupfer und Kupferlegierungen, Aluminium und Aluminiumlegierungen oder rostfreien Stahl wählt, soweit eine erhöhte Korrosionsbeständigkeit gefordert ist.

30. Einrichtung für den Gas-Flüssigkeits-Kontakt nach irgendeinem der Ansprüche 1 bis 29, worin die Abdichtung der genannten Wand so, daß sich die genannte Flüssigkeit und das genannte wärmefördernde Strömungsmittel nicht vermischen können, mit Hilfe an sich bekannter Mittel sichergestellt ist, in typischer Weise mit Hilfe radialer oder kreisförmiger Rillen an der Oberfläche des genannten Plättchens, dünner, ebener Dichtungen aus Kunststoff oder aus expandiertem und wieder verdichtetem Graphit, durch Verklebung oder durch Verschweißung, und daß der feste Zusammenbau der Plättchen mit an sich bekannten Mitteln erzielt wird, in typischer Weise mit Hilfe von Gewindestangen, die es gestatten, den genannten Stapel zusammengedrückt zu halten.

31. Einrichtung für den Gas-Flüssigkeits-Kontakt nach irgendeinem der Ansprüche 1 bis 30, mit Mitteln, um die Beschickung und den Umlauf der genannten Flüssigkeit und des genannten, wärmefördernden Strömungsmittels sowie den Umlauf von Dämpfen sicherzustellen, die sich über der genannten Flüssigkeit befinden.

32. Benutzung einer Einrichtung für den Gas-Flüssigkeits-Kontakt nach irgendeinem der Ansprüche 1 bis 31 zum Auftrennen eines flüssigen Gemischs durch Verdampfung-Kondensation, von dem bestimmte Anteile flüchtig sind und andere nicht.

33. Benutzung einer Einrichtung für den Gas-Flüssigkeits-Kontakt nach irgendeinem der Ansprüche 1 bis 31 zum Absorbieren eines Dampfes, der rein oder in einem Inertgas verdünnt vorliegt, in einer absorbierenden, nicht-flüchtigen Flüssigkeit, wobei die Absorption von einer exothermen oder endothermen Reaktion in der flüssigen Phase gefolgt sein kann.

FIG 1

FIG 2

FIG 3a

FIG 3b

FIG 3c

FIG 4a

26

8

25

24

28

23

27

6

7

30

1

2

13

13

9

9

L

Ep

10

7

12

29

7

7

FIG 4b

FIG 5a

FIG 5b

FIG 5c

FIG 5d

22

FIG 5e

FIG 6

FIG 7a

FIG 7b

FIG 7c

FIG 7d

FIG 8a

FIG 8b

FIG 9a

FIG 9b

FIG 10a

FIG 10b

FIG 11a

FIG 11b